# EUROPÄISCHE PATENTSCHRIFT

(11) **EP 2 974 945 B1**
(45) Veröffentlichungstag und Bekanntmachung des Hinweises auf die Patenterteilung: **22.08.2018**
(21) Anmeldenummer: 15001629.3
(22) Anmeldetag: 01.06.2015
(51) Int. Cl.: B62D 25/10, B62D 25/12, B60R 21/34

(54) **KLAPPE FÜR EIN FAHRZEUG**
FLAP FOR A VEHICLE
RABAT POUR UN VÉHICULE

(30) Priorität: 17.07.2014 DE 102014010633
(43) Veröffentlichungstag der Anmeldung: 20.01.2016
(73) Patentinhaber: AUDI AG, 85045 Ingolstadt (DE)
(72) Erfinder: Pfaller, Bernhard-Konrad, DE - 85095 Denkendorf (DE); Seiler, Martin, DE - 85122 Hitzhofen (DE); Wittmann, Markus, DE - 85095 Denkendorf (DE)

(56) Entgegenhaltungen:
- WO-A1-2012/096244
- DE-A1-102012 003 634
- JP-A- S61 282 173
- JP-A- 2004 148 886
- JP-A- 2006 008 048

## Beschreibung

Die Erfindung betrifft eine Klappe für ein Fahrzeug gemäß dem Oberbegriff des Patentanspruchs 1.

Aus Serienfahrzeugen der Anmelderin, wie beispielsweise dem Audi A6, welcher auf der Plattform AU57x aufbaut, sind Frontklappen für Fahrzeuge bekannt, welche jeweils ein als Außenhaut ausgeführtes Außenteil und mindestens ein Innenteil aufweisen, welches mit einem Verstärkungselement gekoppelt ist. Das Verstärkungselement ist im vorderen Bereich der Fahrzeugfrontklappe zwischen dem Außenteil und dem Innenteil angeordnet ist und weist mindestens eine Aufnahme für Befestigungselemente auf. So kann beispielsweise die Befestigung von Schließbügeln, welche Teil eines Klappenschlosses sind, an der Frontklappe über Einpressbolzen erfolgen, welche in das Verstärkungselement eingepresst werden. Das Verstärkungselement wird anschließend von oben auf das Innenteil aufgelegt, wobei die Einpressbolzen durch Löcher im Innenteil durchgesteckt werden. Hierbei müssen die Verbindungsflächen des Innenteils und des Verstärkungselements auf Anlage kommen, damit kein Luftspalt entsteht, der später dann zu einem Drehmomentenabfall bei der Verschraubung der Schließbügel führen kann. Dadurch entsteht eine sehr steife "Topfform", welche sich negativ auf den Fußgängerschutz auswirken kann. Um dies zu kompensieren, werden zusätzliche Deformationsteile vorgesehen.

Aus der DE 10 2012 003 634 A1 ist beispielsweise eine Motorhaube für ein Fahrzeug bekannt, welche zumindest ein Außenhautelement und ein Innenelement aufweist. Hierbei ist zumindest ein Flächenabschnitt des Innenelements derart geschlitzt ausgeführt, dass Laschen entstehen, welche von dem Flächenabschnitt abragen und in Richtung des Außenhautelements geführt und mit diesem verbunden sind.

Aus der WO 2012/096244 A1 und der JP S61 282173 A ist jeweils eine Motorhaube für ein Fahrzeug mit einem Außenteil und einem Innenteil bekannt, welches mit einem Verstärkungselement gekoppelt ist, welches zumindest bereichsweise zwischen dem Außenteil und dem Innenteil angeordnet ist. Das Verstärkungselement weist eine als Befestigungskonsole ausführte Aufnahme für ein erstes Befestigungselement auf, welche das Verstärkungselement mit dem Innenteil verbindet und mindestens ein erstes Befestigungselement trägt, an welchem eine weitere Komponente befestigt werden kann.

Aus der JP 2006 008048 A ist eine gattungsgemäße Klappe für ein Fahrzeug, mit einem Außenteil und mindestens einem Innenteil bekannt, welches mit einem Verstärkungselement gekoppelt ist, welches zumindest bereichsweise zwischen dem Außenteil und dem Innenteil angeordnet ist. Das Verstärkungselement weist mindestens eine Aufnahme für ein erstes Befestigungselement auf, wobei die mindestens eine Aufnahme als Befestigungslasche ausgeführt ist, welche das Verstärkungselement mit dem Innenteil verbindet und mindestens ein erstes Befestigungselement trägt, an welchem eine weitere Komponente befestigbar ist, die die mindestens eine Befestigungslasche ist L-förmig ausgebildet, wobei ein Schenkel der Befestigungslasche eine Anlagefläche ausbildet.

Der Erfindung liegt die Aufgabe zu Grunde, eine Klappe für ein Fahrzeug bereitzustellen, welche eine stabile Anbindung von zu befestigenden Komponenten und einen guten Fußgängerschutz ohne zusätzliche Deformationsteile ermöglicht.

Erfindungsgemäß wird die Aufgabe durch Bereitstellung einer Klappe für ein Fahrzeug mit den Merkmalen des Patentanspruchs 1 gelöst. Vorteilhafte Ausführungsformen und Weiterbildungen der Erfindung sind in den abhängigen Ansprüchen angegeben.

Um eine Klappe für ein Fahrzeug bereitzustellen, welche eine stabile Anbindung von zu befestigenden Komponenten und einen guten Fußgängerschutz ohne zusätzliche Deformationsteile ermöglicht, ist mindestens eine Aufnahme für ein erstes Befestigungselement als Befestigungslasche ausgeführt, welche das Verstärkungselement mit dem Innenteil verbindet und das mindestens eine erste Befestigungselement trägt, an welchem eine weitere Komponente befestigbar ist. Hierbei ist die mindestens eine Befestigungslasche L-förmig ausgebildet, wobei ein Schenkel der Befestigungslasche eine Anlagefläche ausbildet. Das erste Befestigungselement ist als Gewindebolzen mit einem Gewindeschaft und einem Kopf ausgeführt. Hierbei ist der Gewindeschaft durch die Anlagefläche und das Innenteil geschossen, so dass der Kopf an der Anlagefläche der Befestigungslasche anliegt und der Gewindeschaft über das Innenteil übersteht, so dass die weitere Komponente einfach befestigt werden kann. Die zu befestigende Komponente umfasst eine Grundplatte, welche über mindestens ein als Mutter ausgeführtes zweites Befestigungselement, welches auf den Gewindeschaft aufgeschraubt ist, am Innenteil und/oder Verstärkungselement verschraubt ist.

In vorteilhafter Weise erreicht man mittels der Anbindung des mindestens einen ersten Befestigungselements über eine Laschengeometrie eine sehr stabile, aber auch für den Fußgängerschutz nachgiebige Form. Die ersten Befestigungselemente für die weitere Komponente werden erst im Rohbau gesetzt.

Ausführungsformen der erfindungsgemäßen Klappe für ein Fahrzeug können in vorteilhafter Weise einen wesentlich größeren Deformationsweg erreichen, so dass die Aufschlagkräfte für einen Fußgänger erheblich reduziert werden können. Dadurch kann der Fußgängerschutz erheblich erhöht werden. Zusätzlich aufwändige Maßnahmen, wie beispielsweise Blechdeformationsteile, können damit in vorteilhafter Weise entfallen. Des Weiteren kann die Beul- und Poliersteifigkeit optimal mittels des Verstärkungselements umgesetzt werden.

In weiterer vorteilhafter Ausgestaltung der erfindungsgemäßen Klappe kann das Verstärkungselement mindestens eine Aussparung aufweisen, in welcher die mindestens eine Befestigungslasche angeordnet ist. Die mindestens eine Befestigungslasche wird erfindungsgemäß so in Richtung Innenteil gebogen, dass die Anlagefläche am Innenteil anliegt.

In weiterer vorteilhafter Ausgestaltung der erfindungsgemäßen Klappe kann die Anlagefläche über mindestens eine Fixierung an dem Innenteil vorfixiert werden. Das erste Befestigungselement wird dann während des Rohbaus montiert.

In weiterer vorteilhafter Ausgestaltung der erfindungsgemäßen Klappe kann die zu befestigende Komponente ein Bauteil einer Klappenschließvorrichtung sein. So kann die zu befestigende Komponente beispielsweise einen Schließbügel oder ein Klappenschloss umfassen.

In weiterer vorteilhafter Ausgestaltung der erfindungsgemäßen Klappe kann das Verstärkungselement als Stanzbiegeteil ausgeführt werden. Dies ermöglicht eine schnelle und kostengünstige Herstellung des Verstärkungselements.

Eine vorteilhafte Ausführungsform der Erfindung ist in den Zeichnungen dargestellt und wird nachfolgend beschrieben. In den Zeichnungen bezeichnen gleiche Bezugszeichen Komponenten bzw. Elemente, die gleiche bzw. analoge Funktionen ausführen.
- Fig. 1: eine schematische perspektivische Darstellung eines Ausschnitts eines Ausführungsbeispiels einer erfindungsgemäßen Frontklappe,
- Fig. 2: eine schematische perspektivische Darstellung von oben eines vorderen Abschnitts des Ausführungsbeispiels einer erfindungsgemäßen Frontklappe aus Fig. 1 ohne Außenteil,
- Fig. 3: eine schematische perspektivische Darstellung eines Details aus Fig. 2, und
- Fig. 4: ein schematischer Teilschnitt entlang der Schnittlinie IV in Fig. 3.

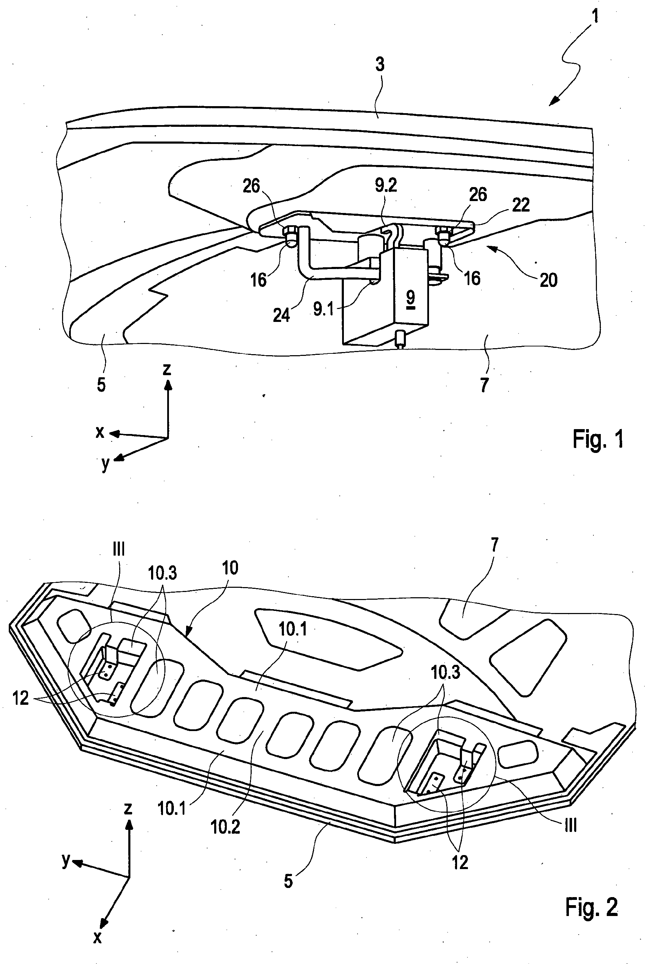

Wie aus Fig. 1 bis 4 ersichtlich ist, weist eine Klappe 1 für ein Fahrzeug ein Außenteil 3 und mindestens ein Innenteil 5 auf, welches mit einem Verstärkungselement 10 gekoppelt ist. Das Verstärkungselement 10 ist zumindest bereichsweise zwischen dem Außenteil 3 und dem Innenteil 5 angeordnet und weist mindestens eine Aufnahme für ein erstes Befestigungselement 16 auf. Erfindungsgemäß ist die mindestens eine Aufnahme als Befestigungslasche 12 ausgeführt, welche das Verstärkungselement 10 mit dem Innenteil 5 verbindet und mindestens ein erstes Befestigungselement 16 trägt, an welchem eine weitere Komponente 20 befestigbar ist. Im dargestellten Ausführungsbeispiel ist die Klappe 1 als Frontklappe ausgeführt. Die erfindungsgemäße Klappe 1 kann analog aber auch als Heckklappe ausgeführt werden.

Wie aus Fig. 1 und 2 weiter ersichtlich ist, weist die erfindungsgemäße Klappe 1 eine Verkleidung 7 auf, welche dem abzudeckenden Motorraum bzw. Laderaum zugewandt ist. Die Verkleidung ist vorzugsweise aus Dämmmaterialen zur Geräuschdämmung hergestellt. Zur besseren Beschreibung wurde in den Fig. 2 bis 4 das vorzugsweise als Außenhaut ausgeführte Außenteil 3 weggelassen.

Wie insbesondere aus Fig. 2 weiter ersichtlich ist, ist das Verstärkungselement 10 im dargestellten Ausführungsbeispiel als Stanzbiegeteil ausgeführt und weist einen im Wesentlichen zwei in Fahrzeugquerrichtung y verlaufende Längsstege 10.1 und mehrere im Wesentlichen in Fahrzeuglängsrichtung x verlaufende Querstege 10.2 auf. Die Längsstege 10.1 und Querstege 10.2 begrenzen mehrere im Verstärkungselement 10 ausbildete Aussparungen 10.3. Wie aus Fig. 2 weiter ersichtlich ist, sind im dargestellten Ausführungsbeispiel in zwei Aussparungen 10.3 jeweils zwei Befestigungslaschen 12 angeordnet. Die Befestigungslaschen 12 sind L-förmig ausgebildet. Hierbei bildet jeweils ein Schenkel der jeweiligen Befestigungslasche 12 eine Anlagefläche 14 aus. Die Befestigungslaschen 12 sind in jeder Aussparung so in Richtung Innenteil 5 gebogen, dass die Anlageflächen 14 der Befestigungslaschen 12 am Innenteil 5 anliegen. Im dargestellten Ausführungsbeispiel sind die anderen Enden der Befestigungslaschen 12 jeweils mit einem der Längsstege 10.1 verbunden bzw. an diese angeformt. Zudem sind die beiden Befestigungslaschen 12 in einer Aussparung 10.3 einander gegenüberliegend angeordnet. Das bedeutet, dass die beiden Befestigungslaschen 12 an verschiedenen Längsstegen 10.1 angeordnet sind.

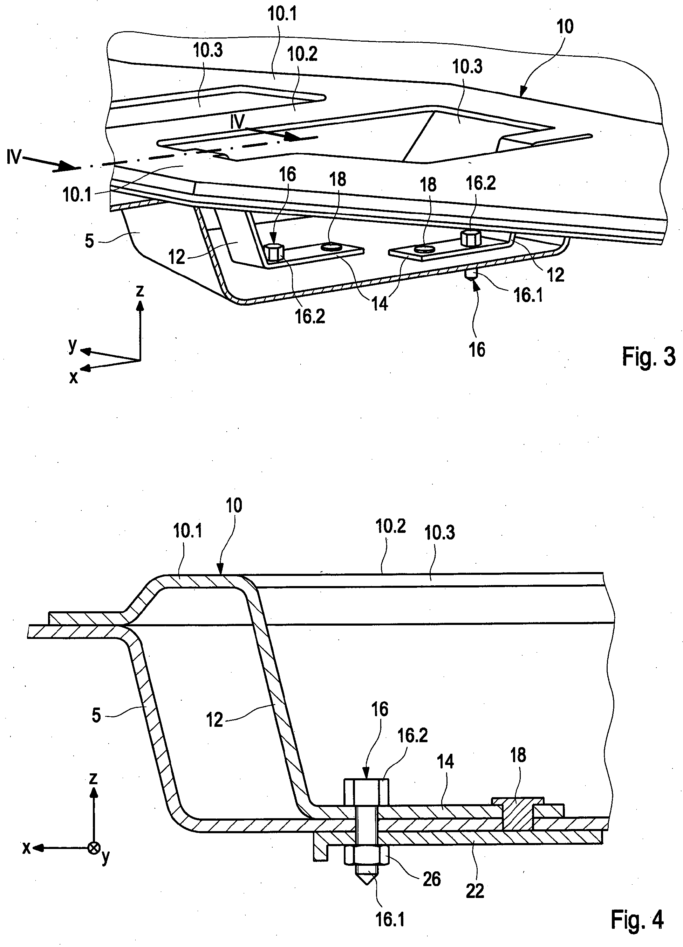

Wie aus Fig. 3 und 4 weiter ersichtlich ist, sind die Anlageflächen 14 der Befestigungslaschen 12 jeweils über mindestens eine Fixierung 18 an dem Innenteil 5 vorfixiert. Die mindestens eine Fixierung 18 kann vorzugsweise als Clinch-Verbindung ausgeführt werden. Im dargestellten Ausführungsbeispiel sind die ersten Befestigungselemente 16 jeweils als Gewindebolzen mit einem Gewindeschaft 16.1 und einem Kopf 16.2 ausgeführt. Hierbei ist jeweils der Gewindeschaft 16.1 durch die Anlagefläche 14 und das Innenteil 5 geschossen, so dass der Kopf 16.2 an der Anlagefläche 14 anliegt und der Gewindeschaft 16.1 über das Innenteil 5 übersteht. Die zu befestigende Komponente 20 wird über mindestens ein zweites Befestigungselement 26, welches mit dem mindestens einen ersten Befestigungselement 16 zusammenwirkt, an dem Innenteil 5 und/oder dem Verstärkungselement 10 befestigt. Die zu befestigende Komponente 20 kann beispielsweise als Bauteil einer Klappenschließvorrichtung ausgeführt werden.

Im dargestellten Ausführungsbeispiel umfasst die Klappenschließvorrichtung zwei an der Klappe 1 zu befestigende Komponenten 20, welche jeweils einen Schließbügel 24 umfassen. Hierbei ist eine erste Komponente 20 der Klappenschließvorrichtung im linken vorderen Bereich der Klappe 1 und eine zweite Komponente 20 der Klappenschließvorrichtung ist im rechten vorderen Bereich der Klappe 1 angeordnet. Die Schließbügel 24 sind im geschlossenen Zustand der Klappe 1 jeweils in einer Aufnahme 9.1 eines karosserieseitig angeordneten Haubenschlosses 9 verriegelt. Fig. 1 zeigt schematisch ein solches Haubenschloss 9, welches an einem nicht näher dargestellten Karosserieelement angeordnet ist. Im dargestellten Ausführungsbeispiel sind karosserieseitig zwei Haubenschlösser 9 angeordnet, welche jeweils mit einem Schließbügel 24 zusammenwirken. Im aufgestellten Zustand der Klappe 1 werden die Schließbügel 24 jeweils von einem Fanghaken 9.2 eines korrespondierenden Haubenschlosses 9 umgriffen. Zum Öffnen der Klappe 1 werden die Fanghaken 9.2 des jeweiligen Haubenschlosses 9 ausgehakt und die Schließbügel 24 freigegeben, so dass die Klappe 1 vollständig geöffnet werden kann. Alternativ können die Haubenschlösser 9 mit der Aufnahme 9.1 und dem Fanghaken 9.2 an der Klappe 1 und die Schließbügel 24 an der Fahrzeugkarosserie angeordnet werden. Selbstverständlich können die ersten Befestigungselemente 16 auch zur Befestigung von anderen Fahrzeugkomponenten, wie beispielsweise Beleuchtungselementen usw. verwendet werden.

Wie aus Fig. 1 und 4 weiter ersichtlich ist, umfasst die zu befestigende Komponente 20 im dargestellten Ausführungsbeispiel eine Grundplatte 22, welche über mindestens ein als Mutter ausgeführtes zweites Befestigungselement 26, welches auf den Gewindeschaft 16.1 aufgeschraubt ist, am Innenteil 5 und/oder Verstärkungselement 10 verschraubt ist. Im dargestellten Ausführungsbeispiel tragen die Befestigungslaschen 12 in einer Aussparung 10.3 jeweils ein erstes Befestigungselement 16. Erfordert eine zu befestigende Komponenten 20 mehr als zwei Befestigungsstellen, so können mehr als zwei Befestigungslaschen 12 in einer Aussparung 10.3 angeordnet werden. Außerdem können die Befestigungslaschen 12 jeweils mehrere erste Befestigungselemente 16 tragen.

In vorteilhafter Weise erreichen Ausführungsformen der erfindungsgemäßen Klappe für ein Fahrzeug mittels der Anbindung des mindestens einen ersten Befestigungselements über eine Laschengeometrie eine sehr stabile, aber auch für den Fußgängerschutz nachgiebige Form. Dadurch kann in vorteilhafter Weise einen wesentlich größeren Deformationsweg erreicht werden, so dass die Aufschlagkräfte für einen Fußgänger erheblich reduziert werden können.

### BEZUGSZEICHENLISTE

- 1: Frontklappe
- 3: Außenteil
- 5: Innenteil
- 7: Verkleidung
- 9: Klappenschloss
- 9.1: Aufnahme
- 9.2: Fanghaken
- 10: Verstärkungselement
- 10.1: Längssteg
- 10.2: Quersteg
- 10.3: Aussparung
- 12: Befestigungslasche
- 14: Anlagefläche
- 16: erstes Befestigungselement
- 16.1: Gewindeschaft
- 16.2: Kopf
- 18: Fixierung
- 20: zu befestigende Komponente
- 22: Grundplatte
- 24: Schließbügel
- 26: zweites Befestigungselement
- x: Fahrzeuglängsrichtung
- y: Fahrzeugquerrichtung
- z: Fahrzeughochrichtung

## Patentansprüche

1. Klappe (1) für ein Fahrzeug mit einem Außenteil (3) und mindestens einem Innenteil (5), welches mit einem Verstärkungselement (10) gekoppelt ist, welches zumindest bereichsweise zwischen dem Außenteil (3) und dem Innenteil (5) angeordnet ist, wobei das Verstärkungselement (10) mindestens eine Aufnahme für ein erstes Befestigungselement (16) aufweist, wobei die mindestens eine Aufnahme als Befestigungslasche (12) ausgeführt ist, welche das Verstärkungselement (10) mit dem Innenteil (5) verbindet und mindestens ein erstes Befestigungselement (16) trägt, an welchem eine weitere Komponente (20) befestigbar ist, wobei die mindestens eine Befestigungslasche (12) L-förmig ausgebildet ist, wobei ein Schenkel der Befestigungslasche (12) eine Anlagefläche (14) ausbildet, **dadurch gekennzeichnet, dass** die mindestens eine Befestigungslasche (12) so in Richtung Innenteil (5) gebogen ist, dass die Anlagefläche (14) am Innenteil (5) anliegt, wobei das erste Befestigungselement (16) als Gewindebolzen mit einem Gewindeschaft (16.1) und einem Kopf (16.2) ausgeführt ist, wobei der Gewindeschaft (16.1) durch die Anlagefläche (14) und das Innenteil (5) geschossen ist, so dass der Kopf (16.2) an der Anlagefläche (14) anliegt und der Gewindeschaft (16.1) über das Innenteil (5) übersteht, wobei die zu befestigende Komponente (20) eine Grundplatte (22) umfasst, welche über mindestens ein als Mutter ausgeführtes zweites Befestigungselement (26), welches auf den Gewindeschaft (16.1) aufgeschraubt ist, am Innenteil (5) und/oder Verstärkungselement (10) verschraubt ist.

2. Klappe nach Anspruch 1, **dadurch gekennzeichnet, dass** das Verstärkungselement (10) mindestens eine Aussparung (10.3) aufweist, in welcher die mindestens eine Befestigungslasche (12) angeordnet ist.

3. Klappe nach Anspruch 1 oder 2, **dadurch gekennzeichnet, dass** die Anlagefläche (14) über mindestens eine Fixierung (18) an dem Innenteil (5) vorfixiert ist.

4. Klappe nach einem der Ansprüche 1 bis 3, **dadurch gekennzeichnet, dass** die zu befestigende Komponente (20) ein Bauteil einer Klappenschließvorrichtung ist.

5. Klappe nach einem der Ansprüche 1 bis 4, **dadurch gekennzeichnet, dass** das Verstärkungselement (10) als Stanzbiegeteil ausgeführt ist.

## Claims

1. Flap (1) for a vehicle, comprising an outer part (3) and at least one inner part (5), which is coupled to a reinforcement element (10) which is arranged at least partly between the outer part (3) and the inner part (5), wherein the reinforcement element (10) comprises at least one mount for a first fastening element (16), wherein the at least one mount is designed as a fastening tab (12) which connects the reinforcement element (10) to the inner part (5) and supports at least one first fastening element (16) onto which an additional component (20) can be secured, wherein the at least one fastening tab (12) is designed to be L-shaped, wherein one side of the fastening tab (12) forms a bearing surface (14),
**characterised in that**
the at least one fastening tab (12) is bent in the direction of the inner part (5) so that the bearing surface (14) bears on the inner part (5), wherein the first fastening element (16) is designed as a threaded bolt with a threaded shaft (16.1) and a head (16.2), wherein the threaded shaft (16.1) projects through the bearing surface (14) and the inner part (5) so that the head (16.2) bears on the bearing surface (14) and the threaded shaft (16.1) projects over the inner part (5), wherein the component (20) to be secured comprises a base plate (22) which is screwed onto the inner part (5) and/or reinforcing element (10) by at least one second fastening element (26) in the form of a nut, which fastening element is screwed onto the threaded shaft (16.1).

2. Flap according to claim 1, **characterised in that** the reinforcement element (10) has at least one recess (10.3) in which the at least one fastening tab (12) is arranged.

3. Flap according to claim 1 or 2, **characterised in that** the bearing surface (14) is prefixed onto the inner part (5) by at least one fastening (18).

4. Flap according to any of claims 1 to 3, **characterised in that** the component (20) to be secured is a structural part of a flap closing device.

5. Flap according to any of claims 1 to 4, **characterised in that** the reinforcement element (10) is configured as stamped bent part.

## Revendications

1. Rabat (1) pour un véhicule avec une partie extérieure (3) et au moins une partie intérieure (5) qui est couplée à un élément de renforcement (10) qui est disposé au moins par endroits entre la partie extérieure (3) et la partie intérieure (5), dans lequel l'élément de renforcement (10) présente au moins un logement pour un premier élément de fixation (16), dans lequel l'au moins un logement est réalisé en tant que languette de fixation (12) qui raccorde l'élément de renforcement (10) à la partie intérieure (5) et porte au moins un premier élément de fixation (16), auquel un autre composant (20) peut être fixé, dans lequel l'au moins une languette de fixation (12) est réalisée en forme de L, dans lequel une branche de la languette de fixation (12) réalise une surface d'appui (14), **caractérisé en ce que** l'au moins une languette de fixation (12) est pliée en direction de la partie intérieure (5) de sorte que la surface d'appui (14) repose contre la partie intérieure (5), dans lequel le premier élément de fixation (16) est réalisé en tant que boulon fileté avec une tige filetée (16.1) et une tête (16.2), dans lequel la tige filetée (16.1) est fermée par la surface d'appui (14) et la partie intérieure (5) de sorte que la tête (16.2) repose contre la surface d'appui (14) et la tige filetée (16.1) dépasse de la partie intérieure (5), dans lequel le composant (20) à fixer comprend une plaque de base (22) qui est vissée, par le biais d'au moins un second élément de fixation (26) réalisé en tant qu'écrou qui est vissé sur la tige filetée (16.1), sur la partie intérieure (5) et/ou l'élément de renforcement (10).

2. Rabat selon la revendication 1, **caractérisé en ce que** l'élément de renforcement (10) présente au moins un évidement (10.3) dans lequel l'au moins une languette de fixation (12) est disposée.

3. Rabat selon la revendication 1 ou 2, **caractérisé en ce que** la surface d'appui (14) est préfixée par le biais de l'au moins une fixation (18) à la partie intérieure (5).

4. Rabat selon l'une quelconque des revendications 1 à 3, **caractérisé en ce que** le composant (20) à fixer est un composant d'un dispositif de fermeture à rabat.

5. Rabat selon l'une quelconque des revendications 1 à 4, **caractérisé en ce que** l'élément de renforcement (10) est réalisé en tant que partie pliée estampée.
